# FASCICULE DE BREVET EUROPEEN

(11) **EP 4 355 653 B1**
(45) Date de publication et mention de la délivrance du brevet: **29.10.2025**
(21) Numéro de dépôt: 22735023.8
(22) Date de dépôt: 13.06.2022
(51) Int. Cl.: B64C 11/32, F01D 7/00

(54) **SYSTEME DE CHANGEMENT DE PAS DES PALES D'UNE HELICE D'UNE TURBOMACHINE**
SYSTEM ZUR ÄNDERUNG DER BLATTVERSTELLUNG EINES PROPELLERS EINER TURBOMASCHINE
SYSTEM FOR CHANGING THE PITCH OF THE BLADES OF A TURBOMACHINE PROPELLER

(30) Priorité: 15.06.2021 FR 2106337
(43) Date de publication de la demande: 24.04.2024
(73) Titulaire: SAFRAN AIRCRAFT ENGINES, 75015 Paris (FR)
(72) Inventeur: PERDRIGEON, Christophe Marcel Lucien, 77550 MOISSY-CRAMAYEL (FR); COTTET, Clément, 77550 MOISSY-CRAMAYEL (FR)
(74) Mandataire: Gevers & Orès
(86) Numéro de dépôt international: PCT/FR2022/051114
(87) Numéro de publication internationale: WO 2022/263753

(56) Documents cités:
- WO-A1-2013/050704
- FR-A1- 3 059 364
- US-A- 5 431 539
- US-A1- 2020 131 917

## Description

### DOMAINE TECHNIQUE

La présente invention concerne le domaine des turbomachines d'aéronef, et en particulier des hélices propulsives de ces turbomachines qui comportent des aubes à calage variable.

### TECHNIQUE ANTÉRIEURE

L'arrière-plan technique comprend notamment les documents US 5 431 539 A, US 2020/131917 A1 et FR 3 059 364 A1.

Le changement de pas ou calage variable de pales d'une hélice de turbomachine est l'une des voies pour améliorer les performances et rendements des turbomachines dans différentes conditions de vol.

Il est connu des turbomachines comprenant au moins une hélice non carénée, également appelées sous le terme anglais « open rotor » ou « unducted fan », équipés de ces systèmes de changement de pas. Dans cette catégorie de turbomachine, il existe celles qui ont deux hélices non carénées et contrarotatives (connues sous l'acronyme anglais UDF pour « UnDucted Fan ») ou celles ayant une seule hélice non carénée et un redresseur comprenant plusieurs aubes de stator (connues sous l'acronyme anglais USF pour « Unducted Single Fan »).

Un turbomoteur de type open rotor comprend principalement, à l'intérieur d'une nacelle cylindrique fixe portée par la structure de l'aéronef, une partie « générateur de gaz » et une partie « propulsion » coaxiales. La partie générateur de gaz peut être disposée en amont ou en aval de la partie propulsion. Les termes « amont » et « aval » sont définis par rapport à la circulation des gaz dans la turbomachine. La partie propulsion comporte deux hélices coaxiales et contrarotatives, respectivement amont et aval qui sont entraînées, en rotation inverse l'une de l'autre, par une turbine, notamment basse pression, de la partie générateur de gaz via un réducteur, par exemple, à trains épicycloïdaux. Les hélices s'étendent sensiblement radialement vis-à-vis de l'arbre de transmission d'axe longitudinal à l'extérieur de la nacelle.

De manière générale, chaque hélice comprend un carter rotatif sensiblement cylindrique portant un moyeu à anneau polygonal extérieur reçu de façon rotative autour de l'axe longitudinal dans la nacelle fixe. Le moyeu comporte des logements cylindriques radiaux répartis sur sa périphérie autour de l'axe longitudinal. Des arbres d'axes radiaux, perpendiculaires à l'axe longitudinal de la turbomachine, solidaires des pieds des pales sont reçus dans les logements des anneaux polygonaux et traversent également des passages radiaux du carter cylindrique.

Pour permettre le fonctionnement optimal du turbomoteur selon les différentes phases de vol rencontrées, les pales des hélices contrarotatives peuvent tourner dans les logements radiaux des anneaux. Pour cela, elles sont entraînées en rotation autour de leurs axes de pivot respectifs, appelé axe de calage, par un système approprié permettant de faire varier le calage des pales en cours de vol, c'est-à-dire le pas des hélices.

Ce système de changement du pas des pales des hélices couvre une plage angulaire de rotation comprise entre deux positions extrêmes, à savoir une position extrême dite de « reverse » pour laquelle les pales dépassent par exemple de 30 ° le plan transversal à l'axe du turbomoteur (la direction d'avance de l'avion) pour participer au freinage de l'aéronef, à la manière des inverseurs de poussée usuels, et une position extrême dite de « mise en drapeau » pour laquelle les pales sont alors effacées au mieux par rapport à la direction d'avance de l'avion, par exemple, en cas de panne moteur et offrir ainsi le moins de résistance (traînée) possible. La course angulaire des pales entre les positions drapeau et reverse est par exemple de l'ordre d'environ 120°.

De manière générale, un système de changement de pas des pales d'une hélice comporte un moyen de commande et un mécanisme de liaison reliant le moyen de commande à chaque pale de l'hélice pour assurer le pivotement angulaire souhaité des pales.

Différentes solutions ont été proposées pour changer le pas des pales des hélices sur des turbomoteurs du type « open rotor » ou autres.

Par exemple, on connaît par le document FR 2 908 451, un turbomoteur dont le système de changement d'orientation des pales de chaque hélice comprend avantageusement un seul vérin annulaire monté par son cylindre, sur le moyeu à anneau de l'hélice, tandis que son piston est relié, par un mécanisme de liaison du système associé au vérin, aux pieds des différentes pales. Le déplacement du piston par suite de la commande fluidique du vérin annulaire assure le pivotement angulaire souhaité des pales par le mécanisme de liaison en faisant varier leur pas.

On connaît également par le document WO 2013/050704, un autre système de changement de pas pour une turbomachine à hélices pour aéronef comprenant un seul vérin annulaire agencé sur un carter fixe ou stator interne par rapport au moyeu de l'hélice et un mécanisme de liaison comportant un palier de transfert fixé d'un côté à la partie mobile du vérin et coopérant, de l'autre côté, avec un moyen de liaison du mécanisme aux pales du moyeu rotatif, de telle façon que le palier de transfert du mécanisme entraîné en rotation transmette le déplacement en translation de la partie mobile du vérin fixe, au moyen de liaison du mécanisme rotatif pour changer l'orientation des pales de l'hélice.

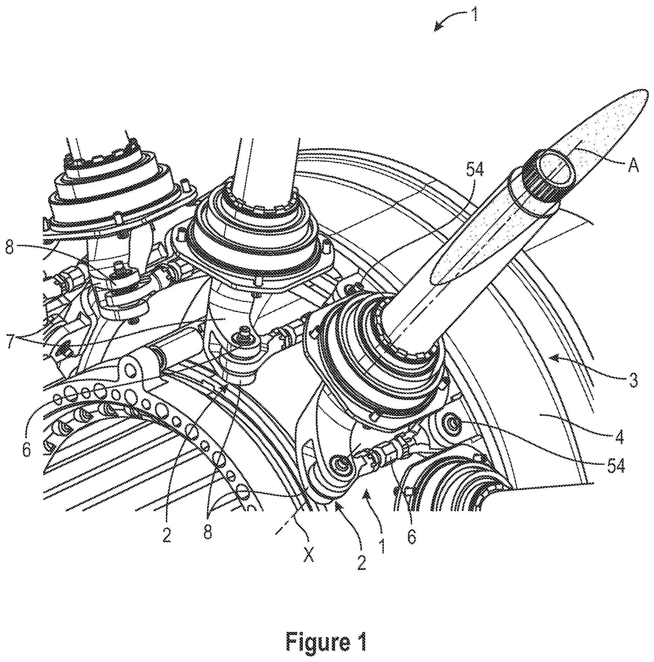

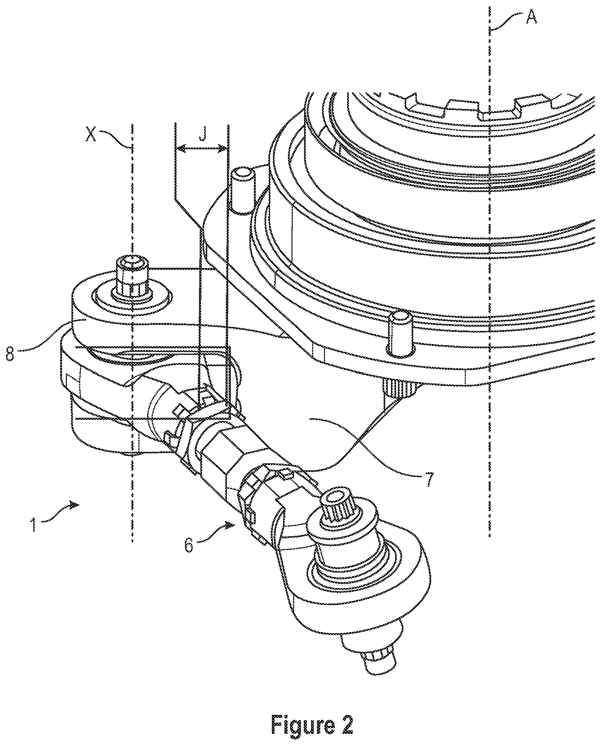

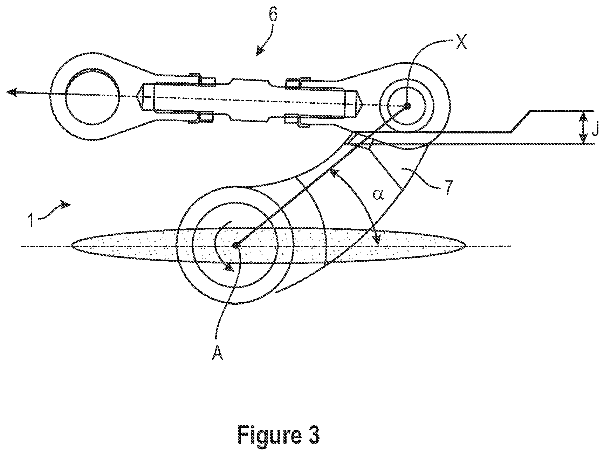

Un exemple de système de changement de pas des pales d'une hélice est illustré sur la figure 1. Dans cet exemple, la tige du vérin est dans sa position sortie correspondant à la position drapeau des pales. Les figures 2 et 3 représentent plus en détails on mécanisme de liaison en perspective (figure 2) et en coupe (figure 3) selon l'axe longitudinal du turbomoteur.

Le mécanisme de liaison 1 comporte des bielles 2 articulées réparties autour du vérin annulaire 3 et reliées d'un côté au piston 4 et de l'autre côté aux arbres 5 radiaux solidaires respectivement des pieds des pales de l'hélice, de sorte à entrainer, par suite du déplacement en translation des bielles du mécanisme de liaison, la rotation des arbres radiaux et des pales associées. Un tel mécanisme de liaison avec bielles garantit sécurité et fiabilité de fonctionnement à l'usage sans coulissement et/ou frottement de pièces les unes par rapport aux autres.

Plus précisément afin de réaliser cette liaison cinématique, chaque bielle 2 comporte une biellette 6 et un excentrique 7. Une extrémité de la biellette 6 est reliée au piston 4 et l'autre extrémité est reliée à une extrémité de l'excentrique 7 via une chape 8 tandis que l'autre extrémité de l'excentrique est reliée aux arbres 5 radiaux solidaires respectivement des pieds des pales de l'hélice. La chape 8 permet de relier la biellette 6 à l'excentrique 7 par une liaison pivot d'axe X parallèle à l'axe radial de calage A de la pale associée. La chape 8 a une forme en U destinée à recevoir l'axe X pour réaliser la liaison pivot. Elle est orientée vers l'extérieur de l'axe de calage. En d'autres termes, la chape comporte deux bras reliés par une portion centrale plus proche de l'axe de calage que la portion ouverte définie entre les extrémités libres des deux bras.

La liaison des biellettes aux excentriques permet de transformer le mouvement de translation du vérin en mouvement de rotation de la pale par un effet de bras de levier pour transmettre le couple nécessaire aux pales de l'hélice et ainsi les entraîner en rotation.

Cependant, l'angle maximum, noté α, de rotation de l'excentrique (correspondant à la position drapeau des pales) est donc limité par le jeu résiduel, noté J, de proximité de l'usinage de la chape tel que schématisé sur la figure 3.

### RÉSUMÉ DE L'INVENTION

La présente invention a pour but de remédier à ces inconvénients et de proposer un système de changement du pas des pales de l'hélice, dont la conception de la chape permet d'optimiser l'étendue de la trajectoire angulaire de l'excentrique afin d'optimiser axialement l'encombrement de la commande cinématique d'une hélice.

À cet effet, l'invention concerne un ensemble pour une turbomachine, comportant une hélice munie de pales et un système de changement de pas des pales de l'hélice, chaque pale étant montée pivotante suivant un axe de calage, le système comportant un moyen de commande et un mécanisme de liaison reliant le moyen de commande à chaque pale de l'hélice, le mécanisme de liaison comportant pour chaque pale de l'hélice :
- une biellette ayant une première extrémité reliée au moyen de commande ; et
- un excentrique ayant une première extrémité reliée à la pale pour l'entrainer en rotation autour de son axe de calage et une deuxième extrémité formant une chape reliée à une deuxième extrémité de la biellette par une liaison pivot.

Selon l'invention, la chape de l'excentrique a une forme en U pour recevoir l'axe de la liaison pivot et comporte deux bras reliés par une portion centrale plus éloignée de l'axe de calage qu'une portion ouverte de la chape opposée à la portion centrale et définie entre les extrémités libres des deux bras de sorte que la chape de l'excentrique est orientée vers l'axe de calage de la pale.

Ainsi, grâce à une telle orientation de la chape de l'excentrique vers l'axe de calage de la pale, également appelée chape interne dans la suite, la trajectoire de débattement de la commande cinématique par biellette est augmentée. En effet, elle permet de déplacer le jeu tangentiel de la liaison biellette / excentrique de manière à ne plus contraindre le débattement de l'excentrique.

Ce type de liaison permet de conserver l'intégralité de la trajectoire angulaire sans être bloqué par une potentielle interférence au niveau de la liaison biellette / excentrique.

Avantageusement, l'excentrique peut présenter une courbure orientée vers la biellette afin de réduire encore l'angle minimum possible de rotation de l'excentrique.

De même, une courbure de la biellette orientée vers l'axe de calage permettrait également de réduire cet angle minimum possible en augmentant le jeu tangentiel.

L'invention concerne également une turbomachine pour aéronef comportant au moins un ensemble tel que décrit précédemment.

La turbomachine peut être du type « open rotor », c'est-à-dire dans laquelle l'hélice est non carénée.

L'invention s'applique également aux turbomachines du type USF, c'est-à-dire ayant une seule hélice non carénée et un redresseur comprenant plusieurs aubes de stator.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1, déjà décrite, représente un système de changement de pas des pales d'une hélice selon un exemple de l'art antérieur ;
- la figure 2, déjà décrite, représente une vue agrandie d'un mécanisme de liaison équipant le système de changement de pas de la figure 1 ;
- la figure 3, déjà décrite, représente une vue en coupe radiale du mécanisme de liaison équipant le système de changement de pas de la figure 2 ;
- la figure 4 représente schématiquement en coupe axiale un exemple de turbomachine à système de changement de pas des pales d'une hélice conforme à l'invention ;
- la figure 5 représente une vue en perspective d'un mécanisme de liaison équipant un système de changement de pas selon l'invention ;
- la figure 6 représente une vue de dessus du mécanisme de liaison de la figure 5 ;
- la figure 7 illustre une vue de dessus de la cinématique de fonctionnement d'un mécanisme de liaison selon l'invention entre les deux positions extrêmes pour un turbomoteur de type « open rotor » ;
- les figures 8A et 8B illustrent la cinématique de fonctionnement d'un mécanisme de liaison selon l'invention entre les deux positions extrêmes pour un turbomoteur de type USF ; et
- la figure 9 illustre un autre mode de réalisation d'un mécanisme de liaison selon l'invention pour un turbomoteur de type « open rotor ».

Les éléments ayant les mêmes fonctions dans les différentes mises en oeuvre ont les mêmes références dans les figures.

### DESCRIPTION DES MODES DE RÉALISATION

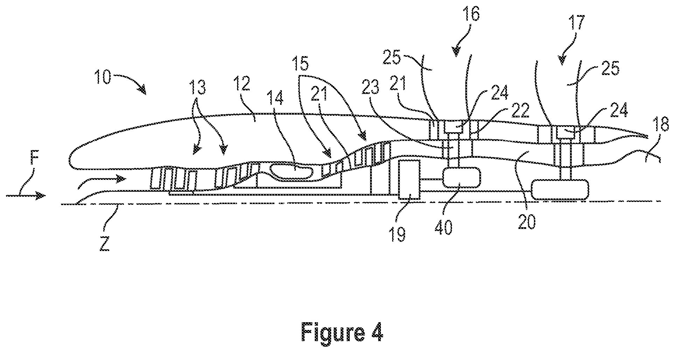

Sur la figure 4 et dans la suite de la description est représenté une turbomachine telle qu'un turbomoteur à soufflante non carénée destinée à équiper un aéronef désigné sous l'expression anglaise « open rotor ». Cependant, l'invention peut s'appliquer à d'autres types de turbomachine.

La turbomachine 10 comprend une nacelle 12 dans laquelle est agencé un générateur de gaz lequel comprend, d'amont en aval, un ensemble de compresseurs 13, une chambre de combustion 14 et un ensemble de turbines 15. Une tuyère 18 est agencée en aval du générateur de gaz.

L'ensemble de compresseurs 13 peut comprendre un ou deux compresseur(s) selon l'architecture du générateur de gaz à simple ou double étage(s). L'ensemble de turbines 15 peut comprendre une turbine haute pression et une turbine basse pression, ou deux turbines (haute pression et à pression intermédiaire) et une turbine basse pression. Le générateur de gaz entraîne la turbine basse pression autour d'un arbre de rotor d'axe longitudinal Z.

La turbomachine comprend un doublet d'hélices contrarotatives avec une hélice 16 amont et une hélice 17 aval. Ces deux hélices amont 16 et aval 17 sont entraînées en rotation de manière contrarotatives par la turbine basse pression par l'intermédiaire d'un dispositif de transmission mécanique 19. Les hélices amont 16 et aval 17 sont montées coaxialement à l'axe longitudinal Z de la turbomachine 10 et sont disposées dans des plans parallèles radiaux, lesquels sont perpendiculaires à l'axe longitudinal Z. Dans le présent exemple, les hélices 16, 17 sont montées en aval du générateur de gaz. Le dispositif de transmission mécanique 19, représenté ici schématiquement, peut comprendre un réducteur différentiel ou un boîtier à trains épicycloïdaux. Il est bien entendu possible d'entraîner directement les hélices amont 16 et aval 17 par la turbine basse pression.

Suivant la configuration décrite ci-dessus, le flux d'air, noté F, entrant dans la turbomachine est comprimé dans l'ensemble de compresseurs 13, puis mélangé à du carburant et brûlé dans la chambre de combustion 14. Les gaz de combustion engendrés passent ensuite dans les turbines 15 pour entraîner, via le dispositif de transmission mécanique 19, les hélices 16, 17 en rotation inverse qui fournissent la majeure partie de la poussée. Les gaz de combustion sont expulsés à travers la tuyère 18 participant à la poussée de la turbomachine 10. Les gaz traversent une veine primaire 20 d'écoulement des gaz s'étendant sensiblement axialement dans la turbomachine entre la nacelle 2 et un carter médian 21 associé au générateur de gaz.

Dans le présent exemple, l'hélice amont 16 comporte un carter cylindrique rotatif vis-à-vis de la nacelle 12 de la turbomachine autour d'un arbre de rotor d'axe longitudinal Z. Le carter est également lié à une partie correspondante du dispositif de transmission mécanique 19. Le carter comprend un anneau polygonal 21 dans lequel sont ménagés des logements 22 radiaux et des passages radiaux qui sont coaxiaux et traversés chacun par un arbre 23 d'axe radial Y, ci-après arbre radial 23, relié à un pied 24 de pale 25 de l'hélice 16, 17 correspondante. Les pales 25 s'étendent radialement à l'extérieur de la nacelle 12. Les logements 22 radiaux ici cylindriques sont régulièrement répartis sur la périphérie de l'anneau polygonal 21 et reçoivent les pieds 24 des pales 25.

Les pales 25 des hélices amont et aval sont du type à calage variable, c'est-à-dire qu'elles sont orientables autour de leurs axes radiaux, appelés axe de calage noté A, grâce à un système 40 de changement du pas des pales, de façon que celles-ci occupent une position angulaire optimale selon les conditions de fonctionnement de la turbomachine et les phases de vol concernées.

Dans la présente description, seul le système 40 de changement du pas des pales associées à l'hélice amont 16 sera décrit. L'hélice aval 17 pourra être équipée d'un système de changement du pas des pales analogue ou différent.

Un tel système de changement de pas comporte un moyen de commande et un mécanisme de liaison 50 reliant le moyen de commande à chaque pale 25 de l'hélice 16.

Le moyen de commande n'est pas détaillé ici. Il comporte un actionneur ayant un corps fixe et un corps mobile en translation par rapport au corps fixe le long de l'axe longitudinal Z, par exemple un vérin annulaire 3 (tel qu'illustré sur la figure 1) à action linéaire selon l'axe longitudinal Z du turbomoteur. Le mécanisme de liaison 50 relie le vérin aux pieds 24 des pales 25 de l'hélice.

Le mécanisme de liaison 50 est disposé autour de l'actionneur. Ce dernier est agencé de manière à déplacer axialement le mécanisme de liaison 50 lequel est relié aux arbres radiaux 23 des pieds de pales de telle manière que le déplacement axial du mécanisme de liaison 50 entraîne le changement de pas des pales. Les arbres radiaux 23 pivotent autour de l'axe radial A dans les logements 22 radiaux.

De préférence, le système 40 de changement de pas comprend un palier de transfert de charge agencé pour relier le mécanisme de liaison 50 au corps mobile de manière à assurer la transmission des efforts axiaux exercés par le corps mobile de l'actionneur.

Le mécanisme de liaison 50 comprend en outre un ensemble de bielles 52 articulées qui sont réparties régulièrement autour de l'actionneur et qui sont destinées à agir sur les pieds 24 des pales 25 via les arbres radiaux 23 pour les entraîner en rotation autour de leur axe radial A. Il y a autant de bielles 52 que de pales 25.

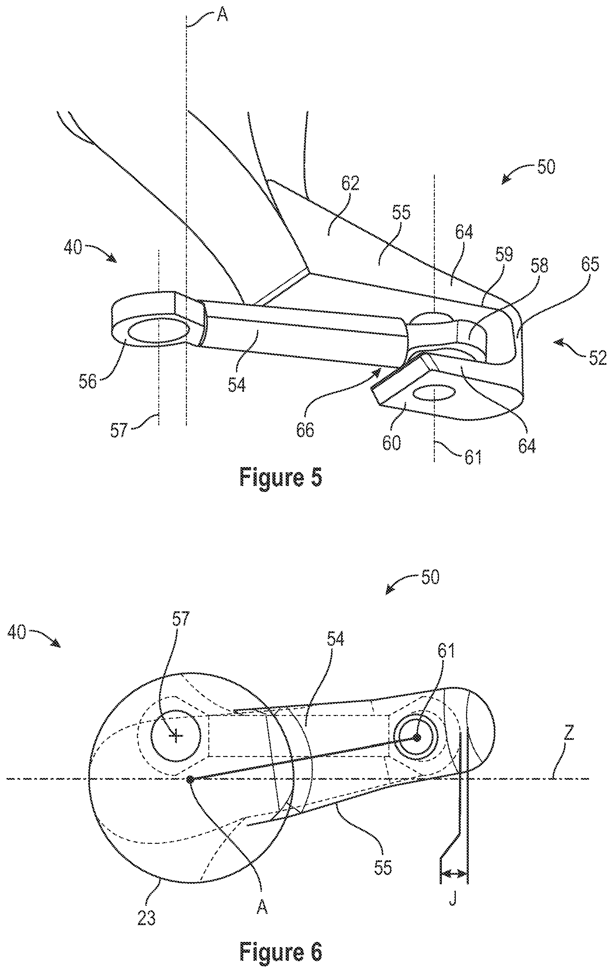

En regard des figures 5 à 9, illustrant plus en détails le mécanisme de liaison 50 associé à une pale selon l'invention, chaque bielle 52, associée à une pale, comporte une biellette 54 et un excentrique 55.

Une première extrémité 56 de la biellette 54 est reliée à l'actionneur autour d'un axe d'articulation 57 parallèles aux axes radiaux A des pales. L'autre extrémité 58 de la biellette 54 est reliée à une première extrémité 59 de l'excentrique 55 via une chape 60 par une liaison pivot via un axe d'articulation 61 parallèles aux précédents.

L'autre extrémité 62 de l'excentrique 55 est reliée à l'arbre 23 radial solidaire du pied 24 de la pale 25 de l'hélice.

La chape 60 permet de relier la biellette 54 à l'excentrique 55 par une liaison pivot d'axe X parallèle à l'axe radial de calage A de la pale associée. La chape 60 a une forme en U destinée à recevoir l'axe X pour réaliser la liaison pivot. Elle est orientée vers l'axe de calage A. En d'autres termes, la chape comporte deux bras 64 reliés par une portion centrale 65 plus éloignée de l'axe de calage A que la portion ouverte 66 définie entre les extrémités libres des deux bras 64 et opposée à la portion centrale 65.

L'orientation de la chape 60 de l'excentrique 55 vers l'axe radial de calage A permet de libérer l'angle de rotation de l'excentrique autour de l'axe radial A.

Cette configuration permet de déplacer le jeu résiduel, noté J sur la figure 6, de proximité entre la biellette 54 et l'excentrique 55 dans une zone sans contrainte avec la trajectoire de l'excentrique. Dans l'exemple illustré sur les figures 5 et 6, la biellette 54 passe intégralement sous l'excentrique 55.

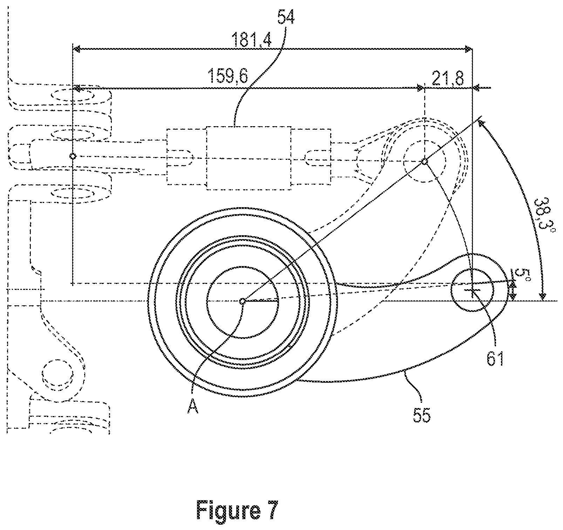

L'angle minimum de rotation de l'excentrique (correspondant à la position drapeau des pales) n'est donc plus limité par le clash tangentiel entre la biellette 54 et l'excentrique 55 mais par l'angle de « non-rebroussement » défini par l'excentrique aligné avec l'axe moteur, qui est limité à 5° dans la pratique. Par exemple, sur un turbomoteur du type « open rotor », l'angle de clash tangentiel correspondant à un vérin sorti pour une position drapeau tel que représenté sur la figure 7 est de 38,3°, c'est-à-dire l'angle minimum en dessous duquel il ne faut pas descendre avec un jeu résiduel J de 5mm.

Grâce à l'invention, l'angle minimum est libéré de cette contrainte, l'excentrique peut donc mécaniquement aller au plus près de l'axe moteur lorsque le vérin est en position rentrée. L'encombrement noté L de la liaison entre la biellette et le vérin est donc réduite mécaniquement à son minimum lorsque le vérin est en position sortie tel qu'illustré sur la figure 7.

A titre de comparaison, intégrer cette forme de chape sur un turbomoteur de type « open rotor » permet un gain axial sur la longueur de la biellette de 22 mm en prenant un angle minimum de 5°, permettant de réduire la course du vérin, la longueur de biellette et par conséquent de gagner en encombrement axial.

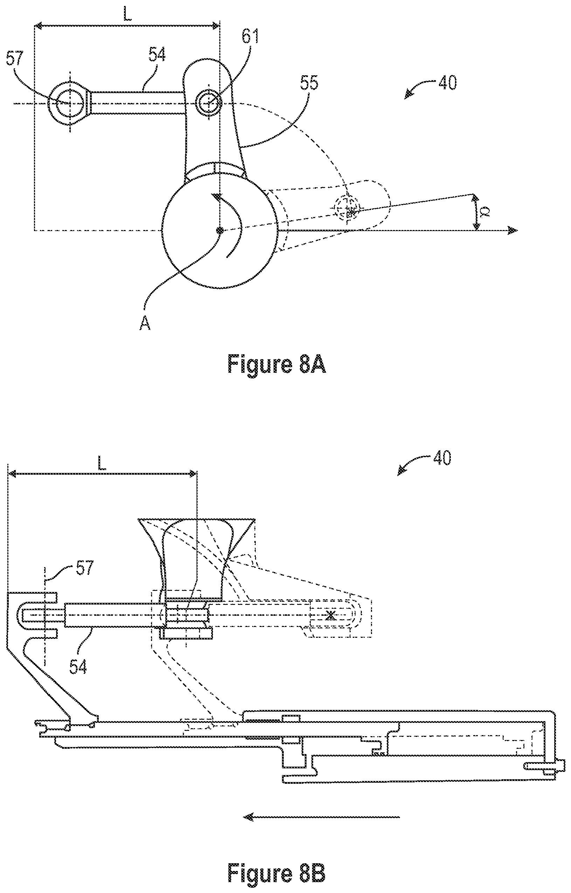

Les figures 8A et 8B illustrent la cinématique de fonctionnement du mécanisme de liaison 50 entre les deux positions extrêmes pouvant être occupées par les pales des hélices, et représentées respectivement en vue de dessus et en coupe transversale, pour un turbomoteur de type USF. La cinématique pour ce type de turbomoteur est inversée par rapport à celle pour un turbomoteur de type « open rotor » : vérin rentré correspond à la position drapeau tandis que le vérin sorti correspond à la position dite « reverse ».

Lorsque le système 50 se trouve dans la position illustrée en pointillée sur les figures 8A et 8B, pour laquelle le vérin annulaire de commande est en position rentrée, les pales de l'hélice sont en position drapeau, c'est-à-dire approximativement dans le prolongement du turbomoteur de façon à offrir le moins de résistance possible (traînée). Cette position en drapeau des pales de l'hélice est, par exemple, utilisée en cas de panne moteur.

Lorsque l'on souhaite modifier l'orientation des pales de l'hélice, le système de changement de pas 40 agit et, à cet effet, le vérin annulaire est commandé entraînant le déplacement en translation de la partie mobile du vérin selon la course choisie, imposée par le système de changement de pas. Dans l'exemple représenté sur les figures 8A et 8B en traits plein, la partie mobile s'est déplacée jusqu'à se trouver dans la position sortie maximale, correspondant à la position reverse des pales.

Comme le montre les figures 8A et 8B, par le déplacement en translation selon la flèche du mécanisme de liaison 50, les biellettes 54 sont tirées par l'intermédiaire d'articulations 57 et entraînent, par les liaisons pivot 61 de la chape 60, les excentriques 55 qui définissent des bras de levier à la manière d'une liaison usuelle bielle-manivelle de sorte à faciliter leur rotation. Les excentriques 55 pivotent donc autour de l'axe géométrique des arbres radiaux A auxquels ils sont solidaires, si bien que les pieds des pales tournent dans leurs logements respectifs de l'anneau polygonal.

En outre, pour réduire encore l'angle minimum de clash tangentiel, l'excentrique et ou la biellette peuvent être courbée. En particulier, l'excentrique peut présenter une courbure C1 orientée vers la biellette. En variante, la biellette peut présenter une courbure C2 orientée vers l'axe de calage.

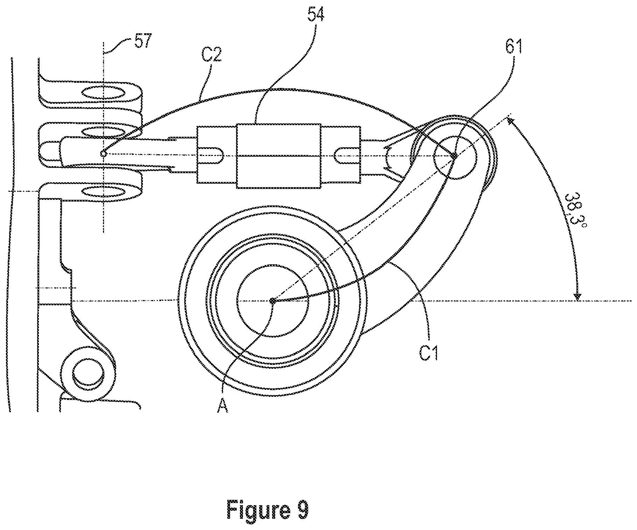

Les deux types de courbures C1, C2 sont schématisées sur la figure 9.

## Revendications

1. Ensemble pour une turbomachine, comportant une hélice (16, 17) munie de pales et un système (40) de changement de pas des pales de l'hélice, chaque pale (25) étant montée pivotante suivant un axe de calage (A), le système comportant un moyen de commande et un mécanisme de liaison (50) reliant le moyen de commande à chaque pale de l'hélice, le mécanisme de liaison comportant pour chaque pale de l'hélice :
- une biellette (54) ayant une première extrémité (56) reliée au moyen de commande ; et
- un excentrique (55) ayant une première extrémité (62) reliée à la pale pour l'entrainer en rotation autour de son axe de calage (A) et une deuxième extrémité (59) formant une chape (60) reliée à une deuxième extrémité (58) de la biellette par une liaison pivot, la chape (60) de l'excentrique ayant une forme en U pour recevoir l'axe de la liaison pivot;
**caractérisé en ce que** la chape (60) de l'excentrique comporte deux bras (64) reliés par une portion centrale (65) plus éloignée de l'axe de calage (A) qu'une portion ouverte (66) de la chape opposée à la portion centrale (65) et définie entre les extrémités libres des deux bras (64) de sorte que la chape de l'excentrique est orientée vers l'axe de calage (A) de la pale.

2. Ensemble selon la revendication 1, dans lequel l'excentrique (55) présente une courbure orientée vers la biellette (54).

3. Ensemble selon la revendication 1 ou 2, dans lequel la biellette (54) présente une courbure orientée vers l'axe de calage (A).

4. Turbomachine (10) pour aéronef comportant au moins un ensemble selon l'une des revendications précédentes.

5. Turbomachine selon la revendication précédente, dans laquelle l'hélice est non carénée.

6. Turbomachine selon la revendication précédente, comportant un redresseur comprenant plusieurs aubes de stator.

## Patentansprüche

1. Baugruppe für ein Turbotriebwerk, umfassend eine mit Blättern ausgestattete Schraube (16, 17) und ein System (40) zur Änderung der Blattverstellung der Schraube, wobei jedes Blatt (25) gemäß einer Keilachse (A) schwenkend montiert ist, wobei das System ein Steuerungsmittel und einen Verbindungsmechanismus (50) umfasst, der das Steuerungsmittel mit jedem Blatt der Schraube verbindet, wobei der Verbindungsmechanismus für jedes Blatt der Schraube Folgendes umfasst:
- eine Verbindungsstange (54) mit einem ersten Ende (56), das mit dem Steuerungsmittel verbunden ist; und
- einen Exzenter (55) mit einem ersten Ende (62), der mit dem Blatt zum Drehantrieb um seine Keilachse (A) verbunden ist, und einem zweiten Ende (59), das eine Gabel (60) bildet, die durch eine Schwenkverbindung mit einem zweiten Ende (58) der Verbindungsstange verbunden ist, wobei die Gabel (60) des Exzenters zum Aufnehmen der Schwenkverbindung eine U-Form aufweist;
**dadurch gekennzeichnet, dass** die Gabel (60) des Exzenters zwei Arme (64) umfasst, die durch einen Mittelabschnitt (65) verbunden sind, der von der Keilachse (A) weiter entfernt ist als ein offener Abschnitt (66) der Gabel, der dem Mittelabschnitt (65) gegenüberliegt und zwischen den freien Enden der zwei Arme (64) derart definiert ist, dass die Gabel des Exzenters in Richtung der Keilachse (A) des Blatts orientiert ist.

2. Baugruppe nach Anspruch 1, wobei der Exzenter (55) eine in Richtung der Verbindungsstange (54) orientierte Krümmung aufweist.

3. Baugruppe nach Anspruch 1 oder 2, wobei die Verbindungsstange (54) eine in Richtung der Keilachse (A) orientierte Krümmung aufweist.

4. Turbotriebwerk (10) für ein Luftfahrzeug, das mindestens eine Baugruppe nach einem der vorstehenden Ansprüche umfasst.

5. Turbotriebwerk nach dem vorstehenden Anspruch, wobei die Schraube nicht verkleidet ist.

6. Turbotriebwerk nach dem vorstehenden Anspruch, umfassend einen Gleichrichter, der mehrere Statorschaufeln beinhaltet.

## Claims

1. A system (40) for changing the pitch of the blades of a propeller of a turbomachine, each blade (25) being mounted to pivot about a pitch axis (A), the system comprising a control means and a connection mechanism (50) connecting the control means to each blade of the propeller, the connection mechanism comprising, for each blade of the propeller:
- a link (54) having a first end (56) connected to the control means; and
- an eccentric (55) having a first end (62) connected to the blade to drive it in rotation about its pitch axis (A) and a second end (59) forming a yoke (60) connected to a second end (58) of the link by a pivot connection; the yoke (60) of the eccentric being U-shaped to receive the axis of the pivot connection and
**characterised in that** the yoke (60) of the eccentric comprises two arms (64) connected by a central portion (65) further away from the pitch axis (A) than an open portion (66) of the yoke opposite the central portion (65) and defined between the free ends of the two arms (64) so that the yoke of the eccentric is oriented towards the pitch axis (A) of the blade.

2. The pitch change system as claimed in claim 1, wherein the eccentric (55) has a curvature oriented towards the link (54).

3. The pitch change system according to claim 1 or 2, wherein the link (54) has a curvature oriented towards the pitch axis (A).

4. A turbomachine (10) for an aircraft comprising at least one propeller (16, 17) equipped with blades and a system (40) for changing the pitch of the blades according to one of the preceding claims.

5. The turbomachine as claimed above, wherein the propeller is unducted.

6. The turbomachine as claimed above, comprising a flow straightener comprising a plurality of stator vanes.
